# FASCICULE DE BREVET EUROPEEN

(11) **EP 1 509 704 B1**
(45) Date de publication et mention de la délivrance du brevet: **16.02.2011**
(21) Numéro de dépôt: 03756020.8
(22) Date de dépôt: 28.05.2003
(51) Int. Cl.: F16D 7/02, H02K 7/108, F16H 35/10

(54) **ACTIONNEUR A LIMITEUR DE COUPLE**
STELLGLIED MIT DREHMOMENTBEGRENZER
ACTUATOR WITH TORQUE LIMITER

(30) Priorité: 31.05.2002 FR 0206742
(43) Date de publication de la demande: 02.03.2005
(73) Titulaire: MESSIER-BUGATTI, 78140 Vélizy Villacoublay (FR)
(72) Inventeur: ZORDAN, Cédric, F-75016 Paris (FR)
(74) Mandataire: Blot, Philippe Robert Emile
(86) Numéro de dépôt international: PCT/FR2003/001621
(87) Numéro de publication internationale: WO 2003/102436

(56) Documents cités:
- DE-A- 2 532 987
- DE-B- 1 146 762
- US-A- 2 709 349
- US-A- 4 542 812

## Description

La présente invention concerne un actionneur du type comportant :
- au moins un moteur d'entraînement ;
- un organe de sortie ;
- un limiteur de couple réglable interposé entre le ou chaque moteur et l'organe de sortie, le limiteur de couple comportant un organe mobile de réglage d'un couple maximal transmis ; et
- un carter renfermant le ou chaque moteur et le limiteur de couple, le carter présentant une ouverture d'accès audit organe mobile de réglage du couple maximal transmis alors que le limiteur de couple est monté dans ledit carter, l'organe de réglage comportant un écrou et le limiteur de couple comportant un arbre présentant un tronçon fileté, l'écrou étant vissé sur le tronçon fileté.

Un tel actionneur est connu de DE 25 32 987. DE 11 46 762 décrit un autre actionneur.

Dans de nombreux domaines, il est nécessaire que les actionnaires soient équipés d'un limiteur de couple. Ce limiteur de couple est constitué par exemple d'organes de frottement maintenus comprimés ensemble, la force de compression de ces organes de frottement définissant le couple de glissement entre ces deux organes. Le couple transmis est limité au couple de glissement

Dans la pratique, il convient de calibrer le limiteur de couple avant montage. Or, dans un actionneur, le limiteur de couple est généralement précédé et/ou suivi d'autres organes de réduction, tels qu'un réducteur épicycloïdal, ou des étages de réduction prévus entre le ou le ou les moteurs d'entraînement et le limiteur de couple.

Du fait des différences d'usinage entre des différentes pièces pouvant être utilisées d'un actionneur à l'autre, il est difficile de déterminer par le calcul, le calibrage du limiteur de couple en fonction des autres éléments de l'actionneur, afin d'assurer un couple maximal prédéterminé au niveau de l'organe de sortie de l'actionneur.

L'invention a pour but de proposer un actionneur permettant de fixer avec précision le couple limite mesuré à l'organe de sortie, et ce indépendamment de la qualité de fabrication des différents organes présents dans la chaîne cinématique entre le ou les moteurs d'entraînement de l'actionneur et l'organe de sortie.

A cet effet, l'invention a pour objet un actionneur du type précité, caractérisé en ce que l'ouverture d'accès est disposée dans le prolongement de l'arbre.

Suivant des modes particuliers de réalisation, l'actionneur comporte en outre l'une ou plusieurs des caractéristiques suivantes :
- la position axiale de l'écrou sur le tronçon fileté définissant le couple maximal transmis, et il comporte des encoches correspondantes ménagées dans l'arbre et sur l'écrou, ainsi qu'un organe d'immobilisation de l'écrou sur l'arbre, lequel organe est engagé dans les encoches correspondantes, suivant la direction de l'arbre ;
- ledit organe d'immobilisation comporte un support disposé en bout d'arbre, lequel support porte au moins un doigt de blocage engagé dans deux encoches correspondantes ;
- il comporte une vis de retenue de l'organe d'immobilisation, laquelle vis est engagée dans un trou taraudé ménagé dans l'arbre ;
- il comporte un bouchon amovible d'obturation de l'ouverture; et
- il comporte au moins un étage de réduction entre le ou chaque moteur et l'organe de sortie.

L'invention sera mieux comprise à la lecture de la description qui va suivre, donnée uniquement à titre d'exemple et faite en se référant aux dessins sur lesquels :
- la figure 1 est une vue en perspective avec arrachement partiel d'un actionneur selon l'invention ;
- la figure 2 est une vue en coupe longitudinale de l'actionneur de la figure 1 ;
- la figure 3 est une vue en perspective avec arrachement partiel du mécanisme de réduction différentielle et de limitation de couple de l'actionneur des figures 1 et 2 ;
- la figure 4 est une vue en perspective éclatée du mécanisme de la figure ; et
- la figure 5 est une vue en coupe longitudinale du mécanisme illustré sur les figures 3 et 4.

L'actionneur 10 illustré sur les figures est destiné au verrouillage d'un train d'atterrissage d'avion en position escamotée.

Cet actionneur comporte un carter 12 à l'intérieur duquel sont logés deux moteurs d'entraînement 14A, 14B, chacun relié mécaniquement à un mécanisme 15 de réduction différentielle et de limitation de couple. Ce mécanisme comporte un réducteur différentiel 16 intégrant un limiteur de couple 18. L'actionneur comporte en outre un réducteur épicycloïdal 20 entraîné par le mécanisme 15 et un organe rotatif de sortie 22 émergeant du boîtier 12 et qui est entraîné lui-même par le réducteur épicycloïdal 20.

Plus précisément, les deux moteurs 14A, 14B sont constitués de moteurs électriques dont les stators 24A, 24B sont solidaires du carter 12 et dont les rotors 26A, 26B sont mobiles à rotation autour d'axes Y1-Y1 et Y2-Y2 s'étendant parallèlement l'un à l'autre.

Les arbres de sortie 28A, 28B des moteurs entraînent des premier et second pignons solaires moteurs 30A, 30B du réducteur différentiel 16. Ces pignons solaires moteurs sont rotatifs autour d'un même axe principal X-X s'étendant parallèlement aux axes Y1-Y1 et Y2-Y2 des moteurs.

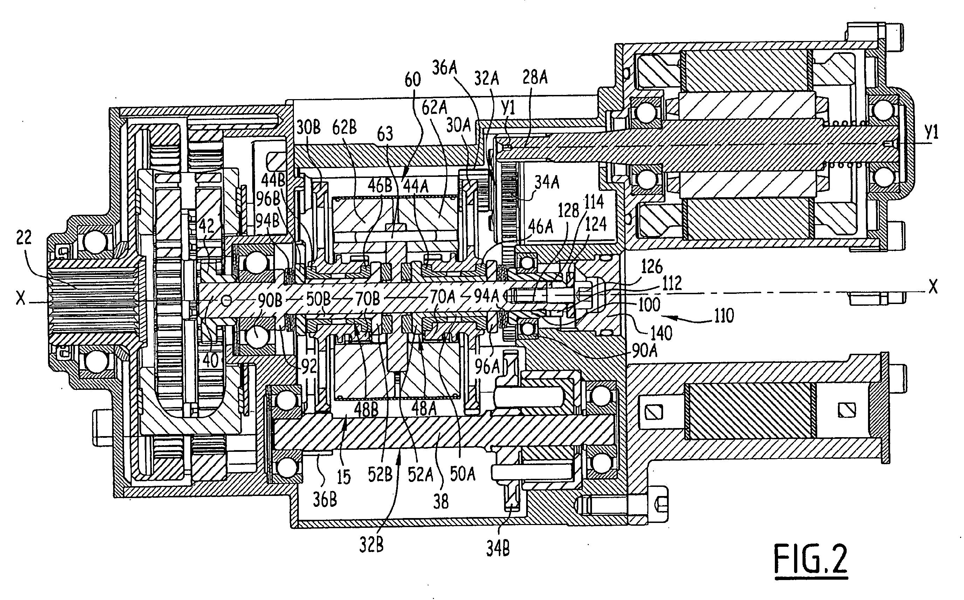

Comme illustré sur la figure 2, l'arbre de sortie 28A du moteur est accouplé au pignon solaire moteur 30A pour son entraînement en rotation par un étage de réduction 32A constitué de deux pignons coaxiaux et solidaires 34A, 36A ayant des diamètres distincts.

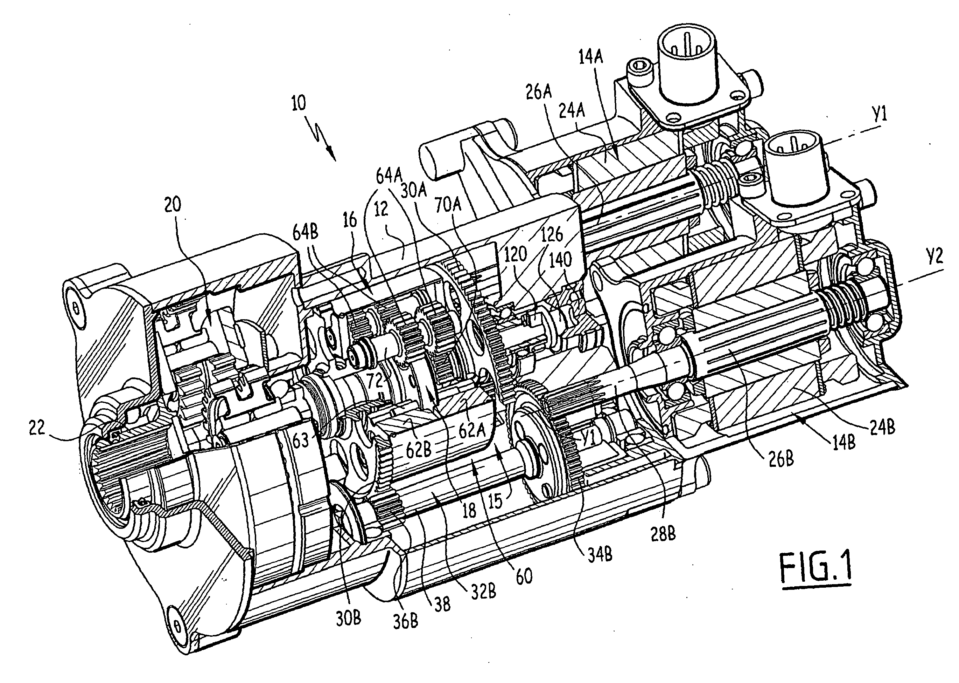

De même, et comme illustré sur la figure 1, l'arbre de sortie 28B du moteur est accouplé en rotation avec le pignon solaire moteur 30B par un étage de réduction 32B constitué de deux pignons coaxiaux de diamètre différents 34B, 36B solidarisés par un arbre 38.

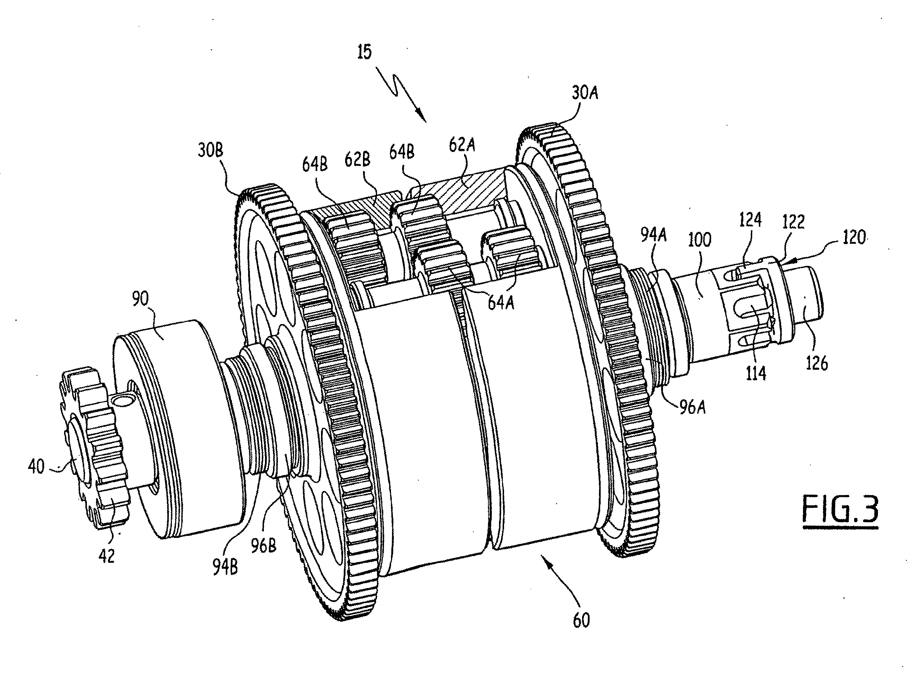

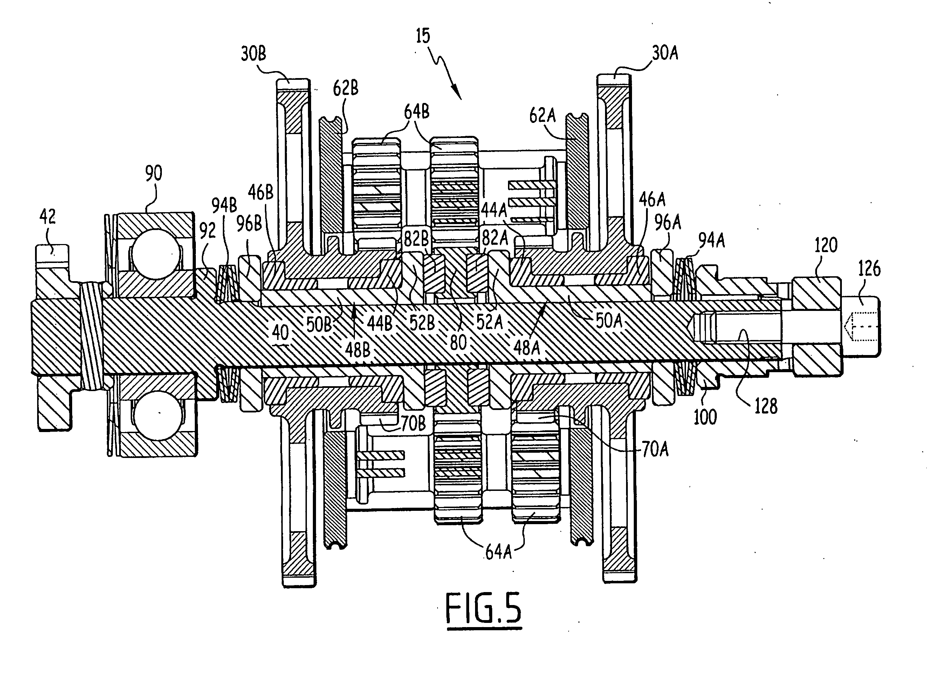

Le mécanisme 15 de réduction différentielle de vitesse et de limitation de couple est représenté seul sur les figures 3 à 5. Il présente un arbre de sortie 40 s'étendant suivant l'axe X-X. Cet arbre présente à une première extrémité un pignon de sortie 42 propre à entraîner le réducteur épicycloïdal 20.

Les deux pignons solaires moteurs 30A, 30B sont montés libres en rotation autour de l'arbre de sortie 40. Les axes des pignons 30A, 30B et de l'arbre de sortie 40 sont identiques. Les pignons 30A, 30B sont supportés par cet arbre et sont guidés en rotation autour de celui-ci par des paliers lisses ou roulements 44A, 46A et 44B, 46B présentant des épaulements latéraux de maintien axial.

Entre ces paliers et l'arbre 40 sont disposés des mors de serrage 48A, 48B. Ces mors sont constitués de manchons 50A, 50B prolongés à leurs extrémités en regard par des collerettes 52A, 52B venues de matière. Les mors 48A, 48B sont liés en rotation à l'arbre 40 mais sont libres de coulisser en translation suivant sa longueur. A cet effet, des profils complémentaires tels que des méplats sont ménagés sur la surface extérieure de l'arbre 40 et sur la surface intérieure des mors 48A, 48B.

Le réducteur différentiel 16 comporte, entre les deux pignons solaires moteurs 30A, 30B, un porte-satellites 60 constitué de deux flasques 62A, 62B solidarisés en rotation l'un à l'autre par des goupilles et des vis 63. Entre les deux flasques 62A, 62B du porte-satellites sont montées des paires de pignons satellites 64A, 64B engrenés l'un avec l'autre et chacun engrené avec un pignon solaire menant de petite taille 70A, 70B solidaire du pignon satellite moteur respectivement 30A et 30B.

Chaque pignon satellite est en fait formé de deux engrenages identiques coaxiaux et solidaires, portés par un arbre 72 avec lequel ils sont venus de matière.

Les arbres 72 sont rotatifs sur eux-mêmes par rapport aux flasques 62A, 62B entre lesquels ils sont maintenus par l'intermédiaire de paliers 74. Les arbres 72 s'étendent parallèlement les uns aux autres et parallèlement à l'axe X-X de l'arbre de sortie 40. Les axes des arbres 72 sont différents de l'axe X-X, de sorte que les pignons satellites 64A, 64B peuvent tourner ensemble globalement autour de l'axe X-X.

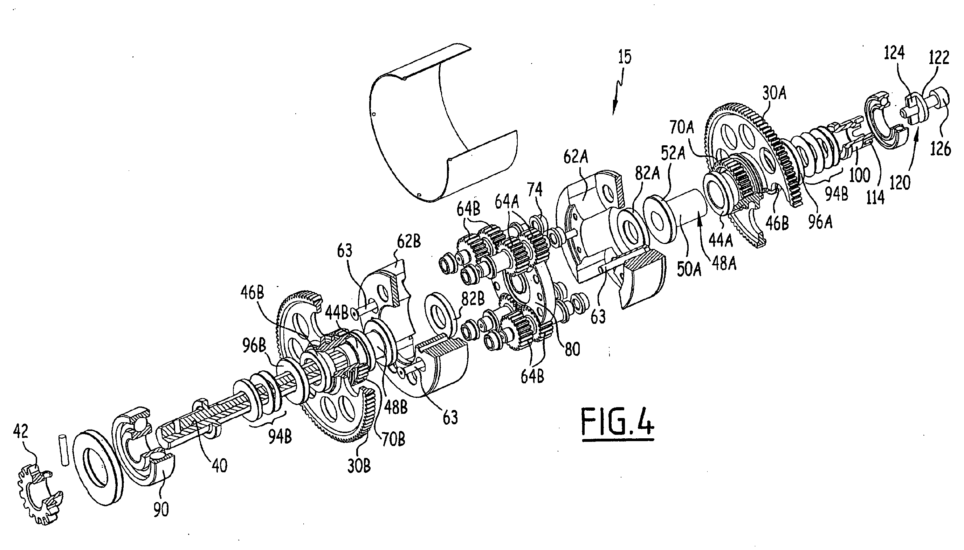

Un moyeu 80 est solidarisé en rotation au porte-satellites 60 par les goupilles 63. Ce moyeu est monté rotatif autour de l'arbre 40. Il est disposé entre les deux pignons solaires moteurs 30A, 30B. Le moyeu 80 est visible plus clairement sur la figure 4. Il présente une forme plane avec un coeur généralement annulaire prolongé par deux oreilles latérales diamétralement opposées au travers desquelles passent les goupilles 33. Les pignons 64A, 64B sont disposés autour du coeur dans les dégagements ménagés entre les oreilles latérales.

Le moyeu 80 comporte deux rondelles de friction 82A, 82B rapportées par collage sur ses surfaces planes opposées. Elles sont maintenues comprimées entre les collerettes 52A, 52B des mors 48A, 48B, ces collerettes formant des organes de frictions propres à coopérer avec les rondelles de friction suivant des surfaces annulaires planes.

L'arbre de sortie 40 est supporté par des roulements à billes 90A, 90B disposés de part et d'autre du mécanisme 15. Ces roulements à billes sont supportés par le carter 12. L'arbre 40 présente une collerette 92 propre à prendre appui axialement sur le roulement à billes 90 lequel s'appuie axialement sur un épaulement du carter 12.

Le moyeu 80 est enserré axialement entre les deux mors 48A 48B. Le mors 48B est en appui sur la collerette 92 par l'intermédiaire d'un empilement de rondelles Belleville 94B et d'une rondelle rigide 96B.

Le mors 48A est pressé par une rondelle rigide 96A et un empilement de rondelles Belleville 94A. Cet empilement porté par l'arbre 40 est retenu serré par un écrou 100 vissé et centré sur la seconde extrémité de l'arbre 40 opposée à celle portant sur le pignon 42. Le roulement à billes 90A est engagé autour de cet écrou 100 sur une longueur de ce dernier présentant extérieurement une surface lisse.

Ainsi, l'écrou 100 assure un maintien axial, du moyeu 80 enserré entre les deux mors 48A, 48B. Ces derniers sont sollicités l'un vers l'autre par les rondelles Belleville 94A, 94B, au travers des rondelles d'appui 96A, 96B. Les rondelles Belleville sont maintenues comprimées d'un côté par la collerette 92 et de l'autre côté par l'écrou 100.

En fonction du serrage de l'écrou 100, les rondelles Belleville sont plus ou moins comprimées et la pression qu'elles exercent sur les mors 48A, 48B peut être ajustée de sorte que la force de frottement entre les mors 48A, 48B et les rondelles de friction 82A, 82B est modifiée.

Pour le réglage de la force de friction, le carter 12 présente une ouverture 110 ménagée dans le prolongement de l'arbre de sortie 40 permettant l'accès à l'écrou 100 et sa manoeuvre avec une clé. Pour assurer l'immobilisation de l'écrou, l'arbre 40 présente, à sa seconde extrémité portant l'écrou, des encoches transversales 112 débouchant au bout de l'arbre. Les encoches sont par exemple au nombre de trois. Des encoches correspondantes 112, 114 sont ménagées dans l'écrou 110. Elles débouchent également au bout de l'écrou.

Un organe de blocage 120 constitué d'une couronne 122 portant deux doigts de blocage 124 est engagé au bout de l'arbre de sorte que les doigts soient reçus dans des encoches radiales correspondantes ménagées à l'extrémité de l'arbre 40 et dans l'écrou 100.

Une vis 126 est engagée dans un trou taraudé 128 ménagé axialement au bout de l'arbre. Elle traverse l'organe de blocage 120 et assure sa retenue.

L'ouverture 110 est obturée par un bouchon de protection amovible et étanche 140.

L'actionneur fonctionne de la manière suivante .

Lorsque les deux moteurs tournent à la même vitesse, les deux pignons solaires moteurs 30A, 30B sont entraînés dans le même sens. Ainsi les pignons satellites 64A, 64B associés d'une même paire sont immobiles l'un par rapport à l'autre. Le porte-satellites 60 est entraîné en rotation par les pignons satellites, eux-mêmes entraînés en rotation autour de l'arbre X-X par les pignons solaires menants 70A, 70B.

Le moyeu 80 se trouve alors entraîné en rotation avec le porte-satellites 60.

Le couple fourni par les moteurs est transmis du moyeu 80 à l'arbre 40, tant que la force de frottement exercée entre les mors de serrage 48A, 48B et les rondelles de friction 82A, 82B est supérieure au couple fourni par les moteurs.

Si ce couple fourni par le moteur est supérieur à la force de frottement imposée par friction, les rondelles de friction glissent sur les surfaces de frictions des mors, de sorte que seule une partie du couple est transmise. Aussi, le moyeu enserré entre les organes de serrage 48A 48B forme un limiteur de couple intégré entre les deux pignons solaires moteurs 30A 30B.

Si l'un des moteurs tourne à une vitesse différente dé l'autre moteur, ou que l'un des moteurs est arrêté, les deux pignons solaires menants 70A, 70B tournent à des vitesses différentes de sorte que les pignons satellites 64A, 64B sont entraînés en rotation sur eux-mêmes dans des sens opposés compensant la différence de vitesse de rotation des deux moteurs. Le porte-satellites 60 est alors entraîné à une vitesse moyenne comprise entre les vitesses des deux pignons planétaires moteurs 30A, 30B entraînant alors l'arbre 40 à cette vitesse tant que le couple fourni par les moteurs est inférieur au couple de frottement imposé par les surfaces de friction en contact.

Comme connu en soi, l'arbre 40 entraîne l'organe de commande 22 au travers du réducteur épicycloïdal 20.

Le limiteur de couple étant interposé entre les deux pignons solaires moteurs 30A, 30B, l'encombrement du mécanisme de réduction et de limitation de couple est réduit, ce qui permet d'obtenir un actionneur ayant un faible encombrement général.

Pour assurer le réglage du limiteur de couple, le bouchon 110 est retiré permettant ainsi d'accéder à la vis 126. Celle-ci est retirée ainsi que l'organe de blocage 120. L'écrou 100 est vissé ou dévissé afin d'assurer une force de serrage adaptée des deux mors 48A, 48B sur les rondelles de friction 82A, 82B.

Après ajustement de la position de l'écrou, l'organe de blocage 120 est réengagé dans des encoches correspondantes 114, 116 de l'écrou et de l'extrémité de l'arbre et la vis 126 est resserrée pour assurer un maintien axial de l'organe de blocage 120. Le bouchon 140 est enfin remise en place pour assurer l'étanchéité du carter.

On comprend ainsi que dans un tel actionneur, le limiteur de couple peut être calibré après montage de l'ensemble de l'actionneur, permettant ainsi de tenir compte des frottements et des pertes de rendement induites par les différents éléments engrenés constituant l'actionneur, et notamment les pignons du réducteur épicycloïdal 20. Ainsi, le couple maximal de sortie de l'actionneur mesuré au niveau de l'organe de sortie 22 peut être défini de manière précise quelle que soit la qualité des usinages des différents éléments mobiles de l'actionneur.

## Revendications

1. Actionneur, comportant :
- au moins un moteur d'entraînement (14A, 14B) ;
- un organe de sortie (22) ;
- un limiteur de couple réglable (18) interposé entre le ou chaque moteur et l'organe de sortie (22), le limiteur de couple comportant un organe mobile (100) de réglage d'un couple maximal transmis ; et
- un carter (12) renfermant le ou chaque moteur et le limiteur de couple, le carter (12) présentant une ouverture (110) d'accès audit organe mobile (100) de réglage du couple maximal transmis alors que le limiteur de couple (18) est monté dans ledit carter (12),
l'organe de réglage comportant un écrou (100) et le limiteur de couple (18) comportant un arbre (40) présentant un tronçon fileté, et l'écrou (100) étant vissé sur le tronçon fileté **caractérisé en ce que** l'ouverture d'accès (110) est disposée dans le prolongement de l'arbre (40).

2. Actionneur selon la revendication 1, **caractérisé en ce que** la position axiale de l'écrou sur le tronçon fileté défint le couple maximal transmis, et **en ce qu'**il comporte des encoches correspondantes (114, 116) ménagées dans l'arbre (40) et sur l'écrou (100), ainsi qu'un organe d'immobilisation (120) de l'écrou (100) sur l'arbre (40), lequel organe est engagé dans les encoches correspondantes, suivant la direction de l'arbre.

3. Actionneur selon la revendication 2, **caractérisé en ce que** ledit organe d'immobilisation (120) comporte un support (122) disposé en bout d'arbre, lequel support (122) porte au moins un doigt de blocage (124) engagé dans deux encoches correspondantes (114, 116).

4. Actionneur selon la revendication 3, **caractérisé en ce qu'**il comporte une vis (126) de retenue de l'organe d'immobilisation (120), laquelle vis (126) est engagée dans un trou taraudé (128) ménagé dans l'arbre (40).

5. Actionneur selon l'une quelconque des revendications 2 à 4, **caractérisé en ce que** l'écrou (100) est vissé sur une extrémité de l'arbre (40), et **en ce que** les encoches (112) de l'arbre (40) sont des encoches transversales débouchant au bout de l'arbre.

6. Actionneur selon la revendication 5, **caractérisé en ce que** les encoches (114) de l'écrou (100) débouchent au bout de l'écrou (100).

7. Actionneur selon une quelconque des revendications précédentes, **caractérisé en ce qu'**il comporte un bouchon amovible (140) d'obturation de l'ouverture (110).

8. Actionneur selon une quelconque des revendications précédentes, **caractérisé en ce qu'**il comporte au moins un étage de réduction (16, 20) entre le ou chaque moteur (14A, 14B) et l'organe de sortie (22).

## Claims

1. An actuator comprising:
- at least one drive motor (14A, 14B);
- an outlet (22);
- an adjustable torque limiter (18) disposed between the or each motor and the outlet (22), the torque limiter comprising a mobile element (100) used to set the maximum torque transmitted; and
- a case (12) housing the or each motor and the torque limiter, the case (12) having an opening (110) for accessing said mobile element (100) used to set the maximum torque transmitted, whereas the torque limiter (18) is mounted in said case (12),
the setting element comprising a nut (100) and the torque limiter (18) comprising a shaft (40) that has a threaded section, and the nut (100) being screwed onto the threaded section, **characterised in that** the access opening (110) is disposed in the extension of the shaft (40).

2. The actuator according to Claim 1, **characterised in that** the axial position of the nut on the threaded section defines the maximum torque transmitted, and **in that** it comprises corresponding notches (114, 116) made in the shaft (40) and on the nut (100), as well as an element for immobilising (120) the nut (100) on the shaft (40), said element being engaged in the corresponding notches according to the direction of the shaft.

3. The actuator according to Claim 2, **characterised in that** said immobilisation element (120) comprises a support (122) disposed at the end of the shaft, said support (122) carrying at least one blocking finger (124) engaged in two corresponding notches (114, 116).

4. The actuator according to Claim 3, **characterised in that** it comprises a screw (126) for retaining the immobilisation element (120), said screw (126) being engaged in a threaded hole (128) made in the shaft (40).

5. The actuator according to any of Claims 2 to 4, **characterised in that** the nut (100) is screwed onto one end of the shaft (40), and **in that** the notches (112) in the shaft (40) are transverse notches opening out at the end of the shaft.

6. The actuator according to Claim 5, **characterised in that** the notches (114) in the nut (100) open out at the end of the nut (100).

7. The actuator according to any of the preceding claims, **characterised in that** it comprises a removable plug (140) for sealing the opening (110).

8. The actuator according to any of the preceding claims, **characterised in that** it comprises at least one reduction stage (16, 20) between the or each motor (14A, 14B) and the outlet (22).

## Patentansprüche

1. Betätigungsgerät umfassend:
- mindestens einen Antriebsmotor (14A, 14B)
- ein Ausgangselement (22)
- einen einstellbaren Drehmomentbegrenzer (18), der zwischen dem oder jedem Motor und dem Ausgangselement (22) angeordnet ist, wobei der Drehmomentbegrenzer ein bewegliches Organ (100) zur Einstellung eines übertragenen maximalen Drehmoments aufweist; und
- ein Gehäuse (12), das den oder jeden Motor und den Drehmomentbegrenzer umschließt, wobei das Gehäuse (12) eine Zugangsöffnung (110) zu dem beweglichen Organ (100) zur Einstellung des übertragenen maximalen Drehmoments aufweist und der Drehmomentbegrenzer (18) in dem Gehäuse (12) montiert ist, wobei das Einstellorgan eine Mutter (100) umfasst und der Drehmomentbegrenzer (18) eine Welle (40) mit einem mit Gewinde versehenen Abschnitt aufweist und die Mutter (100) auf den mit Gewinde versehenen Abschnitt geschraubt ist, **dadurch gekennzeichnet dass** die Zugangsöffnung (110) in der Verlängerung der Welle (40) liegt.

2. Betätigungsgerät nach Anspruch 1, **dadurch gekennzeichnet, dass** die axiale Position der Schraube auf dem mit Gewinde versehenen Abschnitt das übertragene maximale Drehmoment definiert und dass es korrespondierende Einschnitte (114, 116) aufweist, die in der Welle (40) und der Mutter (100) eingearbeitet sind, sowie ein Organ (120) zur Festlegung der Mutter (100) auf der Welle (40), wobei dieses Organ mit den korrespondierenden Einschnitten gemäß der Richtung der Welle im Eingriff ist.

3. Betätigungsgerät nach Anspruch 2, **dadurch gekennzeichnet, dass** das Festlegungsorgan (120) ein Auflager (122) aufweist, das am Ende der Welle angeordnet ist, wobei das Auflager (122) mindestens einen Blockierfinger (124) trägt, der in zwei korrespondierende Einschnitte (114, 116) eingreift.

4. Betätigungsgerät nach Anspruch 3, **dadurch gekennzeichnet, dass** es eine Schraube (126) zum Halten des Festlegungsorgans (120) aufweist, wobei diese Schraube (126) in ein Gewindeloch (128) eingreift, das in der Welle (40) eingearbeitet ist.

5. Betätigungsgerät nach einem beliebigen der Ansprüche 1 bis 4, **dadurch gekennzeichnet, dass** die Mutter (100) auf ein Ende der Welle (40) aufgeschraubt ist und dass die Einschnitte (112) der Welle (40) Quereinschnitte sind, die sich am Ende der Welle öffnen.

6. Betätigungsgerät nach Anspruch 5, **dadurch gekennzeichnet, dass** die Einschnitte (114) der Mutter (100) sich am Ende der Mutter (100) öffnen.

7. Betätigungsgerät nach einem beliebigen der vorhergehenden Ansprüche, **dadurch gekennzeichnet, dass** es einen lösbaren Stopfen (140) zum Verschließen der Öffnung (110) aufweist.

8. Betätigungsgerät nach einem beliebigen der vorhergehenden Ansprüche, **dadurch gekennzeichnet, dass** es mindestens eine Getriebestufe (16, 20) zwischen dem oder jedem Motor (14A, 14B) und dem Ausgangsorgan (22) aufweist.
